# EUROPEAN PATENT SPECIFICATION

(11) **EP 3 771 831 B1**
(45) Date of publication and mention of the grant of the patent: **24.05.2023**
(21) Application number: 20156580.1
(22) Date of filing: 11.02.2020
(51) Int. Cl.: F04D 25/16, F04D 29/28, F04D 29/42, F04D 29/58, F04D 29/70, F04D 25/10, F24F 1/037

(54) **COOLING FAN**
KÜHLGEBLÄSE
VENTILATEUR DE REFROIDISSEMENT

(30) Priority: 29.07.2019 CN 201910699167
(43) Date of publication of application: 03.02.2021
(73) Proprietor: GD Midea Environment Appliances MFG Co., Ltd., Zhongshan, Guangdong 528400 (CN); Midea Group Co., Ltd., Foshan, Guangdong 528311 (CN)
(72) Inventor: QIU, Shuibing, Zhongshan, Guangdong 528400 (CN); GUO, Runming, Zhongshan, Guangdong 528400 (CN); HE, Zhenbin, Zhongshan, Guangdong 528400 (CN); KANG, Runxiang, Zhongshan, Guangdong 528400 (CN); LUO, Weijin, Zhongshan, Guangdong 528400 (CN)
(74) Representative: Grünecker Patent- und Rechtsanwälte PartG mbB

(56) References cited:
- CN-A- 106 765 565
- CN-A- 108 548 258
- CN-U- 202 702 694

## Description

### TECHNICAL FIELD

The present disclosure relates to the technical field of fans, in particular to a cooling fan according to the preamble of claim 1.

### BACKGROUND

Such a cooling fan is known from CN 106 765 565 A.

Most of cooling fans, especially tower cooling fans, use cross-flow air duct technology, and realize vertical large air outlet structure through longer cross-flow turbine. When the vertical discharge area of the cooling fan is large enough, the blowing air can cover most of the human body from head to toe, so as to meet the human body's requirements for blowing air.

However, due to the weak ability of the cross-flow air duct to overcome the air resistance, the air speed of the existing tower cooling fan is low, and the blowing distance is not far enough. In addition, in order to reduce the air resistance, the wet curtain of the existing tower-type cooling fan is relatively thin, resulting in a poor cooling effect.

A cooling fan having an upper wet curtain and a lower wet curtain is known from CN 108 548 258 A.

### SUMMARY

The main objective of the present disclosure is to provide a cooling fan, which aims to solve the problem that the wet curtain is thin due to the restriction of the air resistance of the fan in the related art, which results in a poor cooling effect.

In order to achieve the above objective, the present invention provides for a cooling fan according to claim 1. The cooling fan includes: a casing including an air inlet and an air outlet; a centrifugal fan assembly provided in the casing, an air inlet end of the centrifugal fan assembly being in communication with the air inlet, and an air outlet end of the centrifugal fan assembly being in communication with the air outlet; and a wet curtain provided between the air inlet and the centrifugal fan assembly; a thickness of the wet curtain is D, and D is greater than or equal to 35mm. The cooling fan further includes an auxiliary wet curtain. An auxiliary air inlet is provided on the casing and below the air inlet, and is in communication with the air inlet of the centrifugal fan assembly; and the auxiliary wet curtain is provided between the auxiliary air inlet and the centrifugal fan assembly. The air outlet is provided on a front of the casing, and the air inlet is provided on a back of the casing; the auxiliary air inlet is lower than the air outlet, and the auxiliary air inlet is in a semi-closed loop shape arranged from the back of the casing to the front of the casing; a gap of the semi-closed ring is corresponding to the air outlet, such that a projection of the air outlet on a horizontal plane is staggered with a projection of the auxiliary air inlet on the horizontal plane; and the auxiliary wet curtain is in a semi-circular shape adapted to an area where the auxiliary air inlet is arranged.

In some embodiments, D is less than or equal to 80mm.

In some embodiments, D is greater than or equal to 40mm; and/or D is less than or equal to 70mm; and/or D is greater than or equal to 55mm; and/or D is less than or equal to 65mm; and/or D is equal to 60mm.

In some embodiments, the centrifugal fan assembly includes a dual centrifugal fan assembly, the dual centrifugal fan assembly includes two centrifugal turbines stacked up and down; and/or the centrifugal fan assembly is arranged in an up-down direction, and the air outlet is extended in the up-down direction correspondingly.

In some embodiments, the dual centrifugal fan assembly further includes a dual-axis motor, and two shafts of the dual-axis motor are connected to corresponding rotation shafts of the two centrifugal turbines to drive the two centrifugal turbines simultaneously.

In some embodiments, the cooling fan further includes an air guiding grille provided at the air outlet end of the centrifugal fan assembly, and a flap provided outside the air guiding grille.

In some embodiments, the centrifugal fan assembly is arranged in an up-down direction, and the air outlet is extended in the up-down direction correspondingly; and the flap is extended upwards and downwards, and is rotatably mounted on the casing through up and down rotation shafts, and is driven to swing laterally through a driving mechanism.

In some embodiments, a cross section of the casing is one of an oval shape, a circular shape, and a racetrack shape.

In technical solutions of the present disclosure, a centrifugal fan assembly is provided to replace the existing cross-flow fan. Compared with the cross-flow fan, the centrifugal fan assembly has a higher air speed and a longer blowing distance. Thus, the centrifugal fan has a lower requirement on air resistance than the cross-flow fan. Therefore, in the present disclosure, the wet curtain can be made thicker. Specifically, the thickness of the wet curtain is D, and D is greater than or equal to 35mm (in the related art, D is generally within 30mm), such that the cooling effect can be improved.

### BRIEF DESCRIPTION OF THE DRAWINGS

In order to more clearly illustrate the embodiments of the present disclosure or the technical solutions in the related art, the drawings used in the embodiments or the related art will be briefly described below. Obviously, the drawings in the following description are only some embodiments of the present disclosure. It will be apparent to those skilled in the art that other figures can be obtained from the structures illustrated in the drawings without the inventive effort.
FIG 1 is a schematic perspective view of a cooling fan according to an example not being part of the present invention;
FIG 2 is a schematic cross-sectional view of FIG 1;
FIG 3 is a schematic cross-sectional view of FIG 1;
FIG 4 is a schematic perspective view of a dual centrifugal fan assembly in FIG 1;
FIG 5 is a schematic cross-sectional view of an air guiding grille and a flap in FIG 1;
FIG 6 is a schematic perspective view of the air guiding grille and the flap in FIG 1;
FIG 7 is a schematic perspective view of the cooling fan according to the present disclosure;
FIG. 8 is a schematic rear view of FIG 7;
FIG 9 is a schematic side view of FIG 7; and
FIG 10 is a schematic front view of FIG 7.

### Description of reference numerals:

| Label | Name | Label | Name |
|---|---|---|---|
| 100 | Cooling fan | 2b | Air outlet end |
| 1 | Casing | 21 | Centrifugal turbine |
| 11 | Air inlet | 22 | Dual-axis motor |
| 12 | Air outlet | 3 | Wet curtain |
| 13 | Auxiliary air inlet | 4 | Air guiding grille |
| 2 | Centrifugal fan assembly | 5 | Flap |
| 2a | Air inlet end | | |

The realization of the objective, functional characteristics, advantages of the present disclosure are further described with reference to the accompanying drawings.

### DETAILED DESCRIPTION OF THE EMBODIMENTS

The technical solutions of the embodiments of the present disclosure will be clearly and completely described in the following with reference to the accompanying drawings. It is obvious that the embodiments to be described are only a part rather than all of the embodiments of the present disclosure. All other embodiments obtained by persons skilled in the art based on the embodiments of the present disclosure without creative efforts shall fall within the protection scope of the present disclosure.

It is to be understood that, all of the directional instructions in the embodiments of the present disclosure (such as up, down, left, right, front, rear...) can only be used for explaining relative position relations, moving condition of the elements under a special form (referring to figures), and so on, if the special form changes, the directional instructions changes accordingly.

In addition, the descriptions, such as the "first", the "second" in the embodiment of present disclosure, can only be used for describing the aim of description, and cannot be understood as indicating or suggesting relative importance or impliedly indicating the number of the indicated technical feature. Therefore, the feature indicated by the "first", the "second" can express or impliedly include at least one feature. In addition, the meaning of "and/or" appearing throughout the text includes three paratactic schemes, taking "A and/or B" as examples, including scheme A, or scheme B, or schemes that A and B meet at the same time. Besides, the technical solution of each embodiment can be combined with each other, however the technical solution must base on that the ordinary skill in that art can realize the technical solution, when the combination of the technical solutions is contradictory or cannot be realized, it should consider that the combination of the technical solutions does not exist, and is beyond the protection scope of the present disclosure.

Many cooling fans, especially tower cooling fans, use cross-flow turbines to blow air. However, due to the weak ability of the cross-flow air duct to overcome air resistance, the air speed of the existing tower cooling fan is low, and the blowing distance is not far enough. In addition, in order to reduce the air resistance, the wet curtain of the existing tower cooling fan is thin, usually less than 30mm, resulting in poor cooling effect.

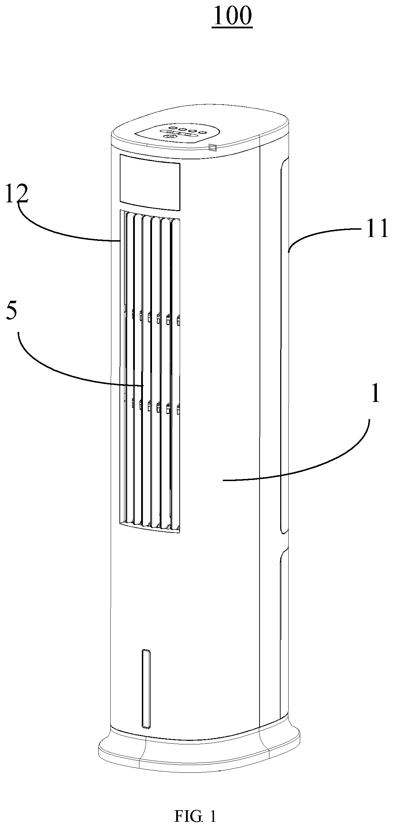

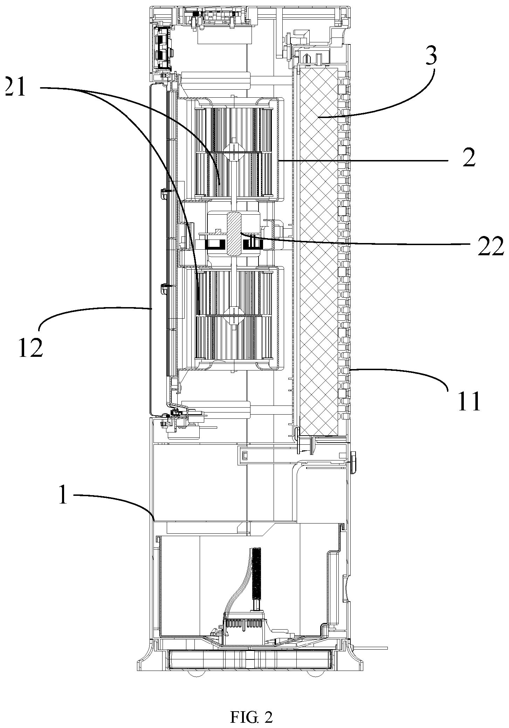

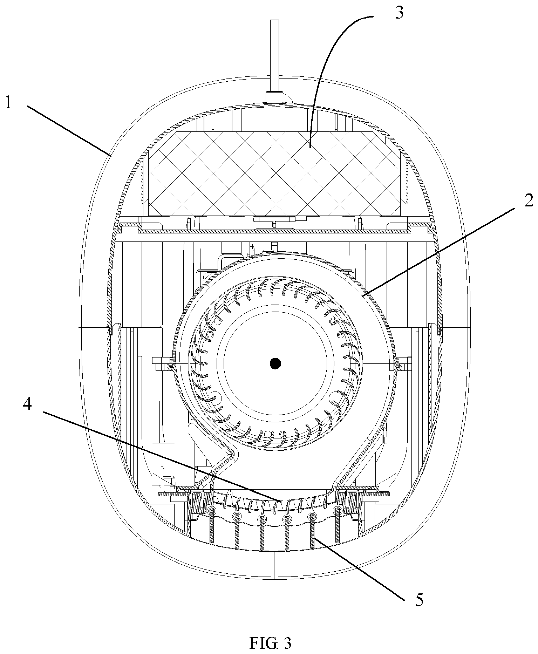

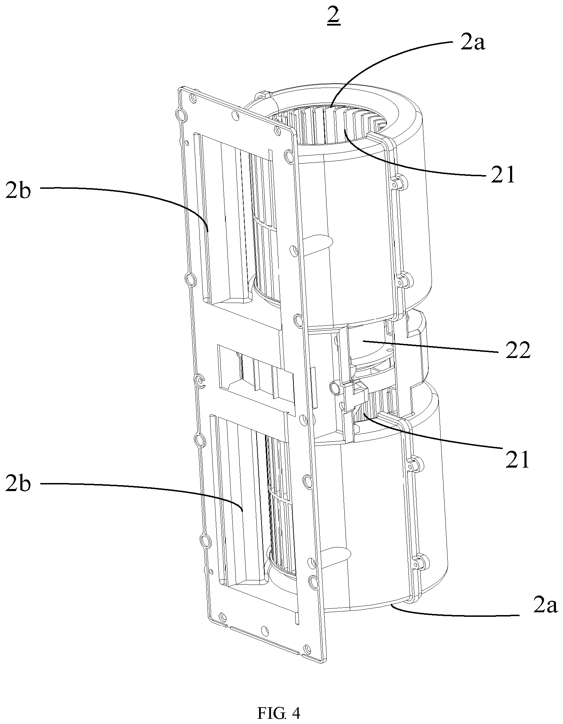

Referring to FIG. 1 to FIG. 4, which show an example not being part of the present invention, a cooling fan 100 includes a casing 1, a centrifugal fan assembly 2, and a wet curtain 3. The cooling fan 100 further includes a humidifying device for humidifying the wet curtain 3, and the humidifying device supplements the wet curtain 3 with moisture, and the humidifying device may be a water pump and a water pipe assembly. The casing 1 includes an air inlet 11 and an air outlet 12. The centrifugal fan assembly 2 is provided in the casing 1. An air inlet end 2a of the centrifugal fan assembly 2 is in communication with the air inlet 11. An air outlet end 2b of the centrifugal fan assembly 2 is in communication with the air outlet 12. The wet curtain 3 is provided between the air inlet 11 and the centrifugal fan assembly 2. A thickness of the wet curtain 3 is D, and D is greater than or equal to 35 mm.

In technical solutions of the present disclosure, a centrifugal fan assembly 2 is provided to replace the existing cross-flow fan. Compared with the cross-flow fan, the centrifugal fan assembly 2 has a higher air speed and a longer blowing distance. Thus, the centrifugal fan has a lower requirement on air resistance than the cross-flow fan. Therefore, in the present disclosure, the wet curtain 3 can be made thicker. Specifically, the thickness of the wet curtain 3 is D, and D is greater than or equal to 35mm (in the related art, D is generally within 30mm), such that the cooling effect can be improved.

The shape of the casing 1 is not limited. In order to obtain a better appearance or to facilitate the placement of the cooling fan 100, the cross-section of the casing 1 is one of oval, circular, and racetrack shape. Specifically, in this example, the cross-section of the casing 1 is oval.

The cooling effect increases as the thickness D of the wet curtain 3 increases. But when D increases to a certain value, the cooling effect is not significantly enhanced. For this reason, optionally, D is less than or equal to 80mm. Since when D exceeds 80mm, the cooling effect is not significantly enhanced, but the generated air resistance is significantly increased.

Obviously, when the thickness D is in different values, the cooling effect is different Further, in order to obtain a better cooling effect, the lower limit value of D can be set to one of 40mm and 55mm. Similarly, in order to integrate the air resistance and cooling effect, the upper limit value of D is set to one of 70mm and 65mm, and optionally, D is equal to 60mm, the cooling effect is good at this time. And after D is greater than 60mm, with the increase of thickness, the increasing trend of cooling effect is obviously weakened. Specially, D is greater than or equal to 40mm; and/or D is less than or equal to 70mm; and/or D is greater than or equal to 55mm; and/or D is less than or equal to 65mm; and/or D is equal to 60mm.

In order to make the cooling fan 100 have a wide range of air output in the up-down direction, that is, to achieve a large vertical air output structure. In this example, the centrifugal fan assembly 2 is disposed in the vertical direction, and accordingly, the air outlet 12 is disposed in the vertical direction. Besides, in this example, in order to further increase the air output range of the cooling fan 100 in the vertical direction, the centrifugal fan assembly 2 includes a dual centrifugal fan assembly, which has two centrifugal turbines 21 stacked up and down. Obviously, this design is not limited to this. In fact, according to the size of the centrifugal turbine 21 and the requirements of the air output range of the cooling fan 100 in the vertical direction, three centrifugal fans and more can be provided.

For this reason, it should be noted that the above-mentioned installation direction of the centrifugal fan assembly 2 (that is, up-down direction) and the embodiment in which the centrifugal fan assembly 2 includes a double centrifugal fan assembly do not need to exist simultaneously, but may alternatively exist. Obviously, in this example, the two implementation manners exist simultaneously. Further, in this example, the dual centrifugal fan assembly further includes a dual shaft motor 22. The two shafts of the two-axis motor 22 are connected to the corresponding rotation shafts of the two centrifugal turbines 21 to drive the two centrifugal turbines 21 simultaneously. The two centrifugal turbines 21 are driven to rotate synchronously through a dual-axis motor 22, so that the two centrifugal turbines 21 can be prevented from rotating asynchronously because they are driven by independent motors. The air flow generated by the two will affect each other, that is, the driving stability by a two-axis motor 22 is good, the air flow interference between the centrifugal turbines 21 is small, and the blowing distance is long.

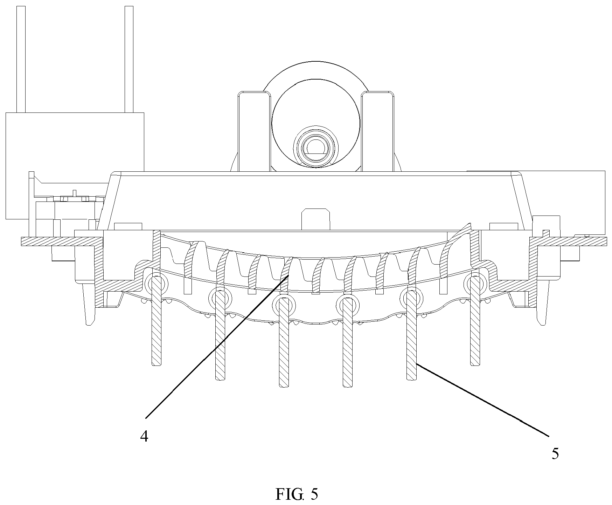

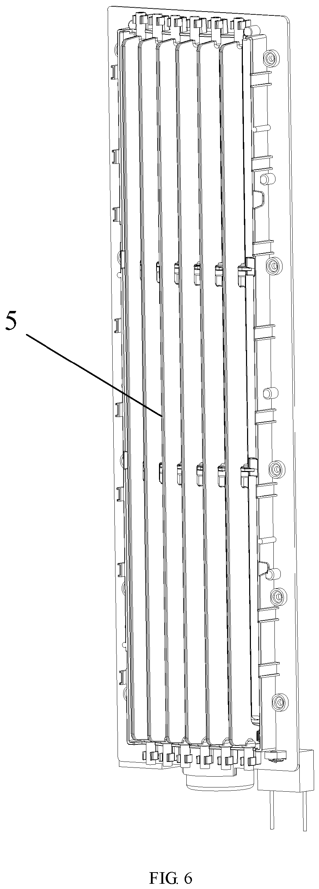

In order to make the cooling fan 100 have a better air output effect, please further refer to FIG 5 and FIG 6. In this example, the cooling fan 100 further includes an air guiding grille 4 and a flap 5, and the air guiding grille 4 is disposed at the air outlet end 2b of the centrifugal fan assembly 2. The air blown out by the air outlet end 2b of the centrifugal fan assembly 2 passes through the diversion effect of the air guiding grille 4 and becomes a positive blowout, so that the air is more uniform and the noise is reduced. The flap 5 is arranged on the outer side of the air guiding grille 4. On the one hand, the function of the flap 5 can increase the air output range by swinging. On the other hand, the function of diversion and boosting can make the distance of the air blown from the air outlet 12 further.

Obviously, from the foregoing description, in this example, the centrifugal fan assembly 2 is disposed in the up-down direction, and accordingly, the air outlet 12 extends in the up-down direction. Therefore, the flap 5 extends in the up-down direction, and the flap 5 is rotatably mounted on the casing 1 through the up and down rotation shafts, and is driven to swing laterally (that is, the left-right direction shown in the Figure) through a driving mechanism. The specific driving mechanism is not limited, and the rotation axis of each flap 5 can be connected through a connecting rod, so that linkage can be achieved. The driving mechanism may include a driving motor and a transmission mechanism. The transmission mechanism converts the rotation of the driving motor into a rotation of one of the flaps 5 to drive each flap 5 to rotate.

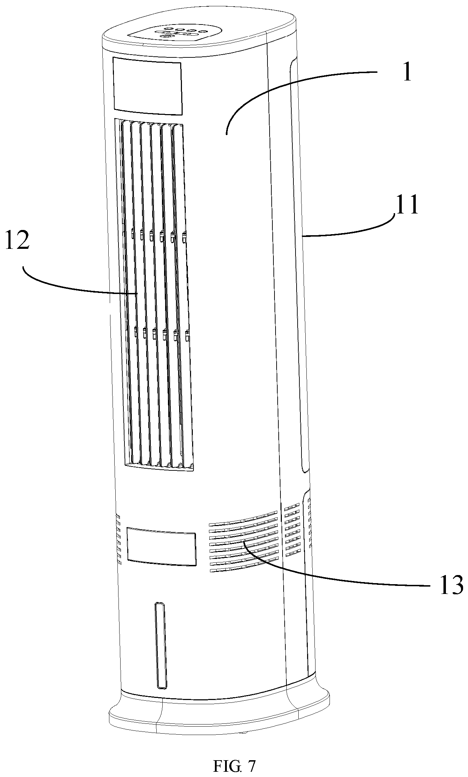

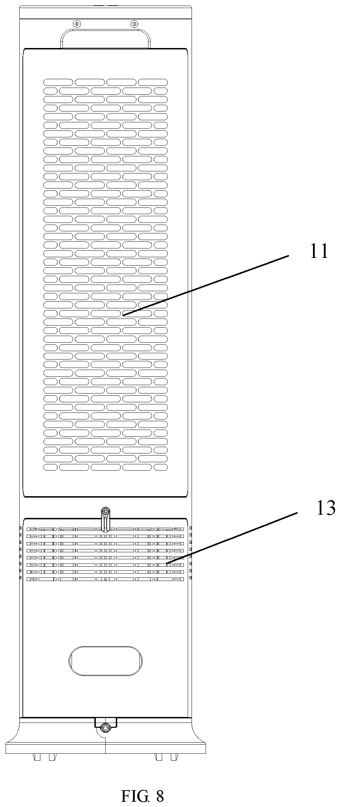

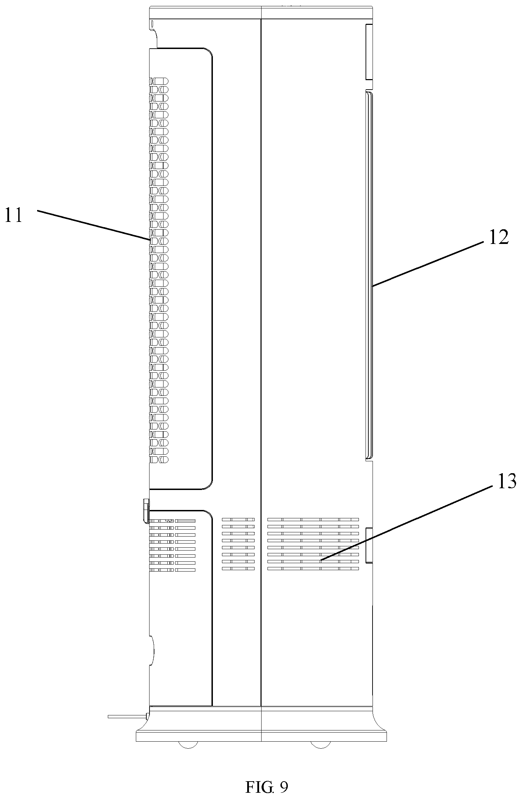

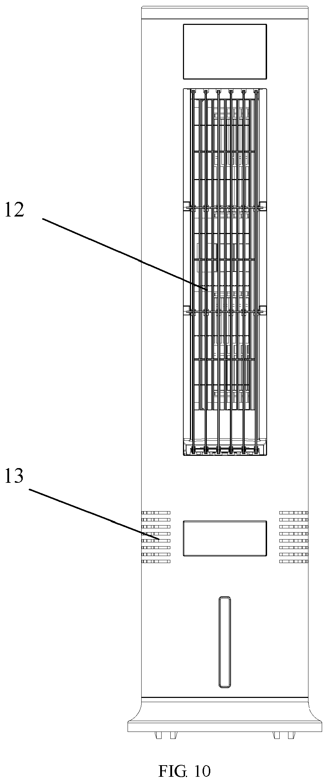

In the present disclosure, referring to FIG 7 to FIG 10, in order to increase the air input and the heat exchange effect on the air inlet, an auxiliary air inlet 13 is provided on the casing 1 and below the air inlet 11. The auxiliary air inlet 13 is in communication with the air inlet 11 of the centrifugal fan assembly 2. The cooling fan 100 further includes an auxiliary wet curtain (not shown), which is disposed between the auxiliary air inlet 13 and the centrifugal fan assembly 2.

More specially, the air outlet 12 is provided on a front of the casing 1, and the air inlet 11 is provided on a back of the casing 1. The auxiliary air inlet 13 is lower than the air outlet 12, and the auxiliary air inlet 13 is in a semi-closed loop shape from the back of the casing 1 to the front of the casing 1. A gap of the semi-closed ring is corresponding to the air outlet 12, such that a projection of the air outlet 12 on a horizontal plane is staggered with a projection of the auxiliary air inlet 13 on the horizontal plane. The auxiliary wet curtain is in a semi-circular shape adapted to an area where the auxiliary air inlet 13 is provided. As such, while increasing the area of the auxiliary air inlet 13 and the auxiliary wet curtain, the influence on the air outlet 12 is reduced.

## Claims

1. A cooling fan (100), comprising:
a casing (1) comprising an air inlet (11) and an air outlet (12), whereby the air outlet (12) is provided on a front of the casing (1), and the air inlet (11) is provided on a back of the casing (1); and
a centrifugal fan (2) assembly provided in the casing (1), an air inlet end of the centrifugal fan assembly (2) being in communication with the air inlet (11), and an air outlet end of the centrifugal fan assembly (2) being in communication with the air outlet (12);
**characterized in that** a wet curtain (3) is provided between the air inlet (11) and the centrifugal fan assembly (2), whereby a thickness of the wet curtain (3) is D, and D is greater than or equal to 35 mm;
an auxiliary air inlet (13) is provided on the casing (1) and below the air inlet (11), and is in communication with the air inlet (11) of the centrifugal fan assembly (2); and
an auxiliary wet curtain is provided between the auxiliary air inlet (13) and the centrifugal fan assembly (2),
the auxiliary air inlet (13) is lower than the air outlet (12), and the auxiliary air inlet (13) is in a semi-closed loop shape arranged from the back of the casing (1) to the front of the casing (1);
a gap of the semi-closed ring is corresponding to the air outlet (12), such that a projection of the air outlet (12) on a horizontal plane is staggered with a projection of the auxiliary air inlet (13) on the horizontal plane; and
the auxiliary wet curtain is in a semi-circular shape adapted to an area where the auxiliary air inlet (13) is arranged.

2. The cooling fan (100) of claim 1, wherein D is less than or equal to 80mm.

3. The cooling fan (100) of claim 1, wherein:
D is greater than or equal to 40mm; and/or
D is less than or equal to 70mm; and/or
D is greater than or equal to 55mm; and/or
D is less than or equal to 65mm; and/or
D is equal to 60mm.

4. The cooling fan (100) of claim 1, wherein:
the centrifugal fan assembly (2) comprises a dual centrifugal fan assembly, the dual centrifugal fan assembly comprises two centrifugal turbines (21) stacked up and down; and/or
the centrifugal fan assembly (2) is arranged in an up-down direction, and the air outlet (12) is extended in the up-down direction correspondingly.

5. The cooling fan (100) of claim 4, wherein:
the dual centrifugal fan assembly further comprises a dual-axis motor (22), and two shafts of the dual-axis motor (22) are connected to corresponding rotation shafts of the two centrifugal turbines (21) to drive the two centrifugal turbines (21) simultaneously.

6. The cooling fan (100) of claim 1, further comprising:
an air guiding grille (4) provided at the air outlet (12) end of the centrifugal fan assembly; and
a flap (5) provided outside the air guiding grille (4).

7. The cooling fan (100) of claim 6, wherein:
the centrifugal fan assembly (2) is arranged in an up-down direction, and the air outlet (12) is extended in the up-down direction correspondingly; and
the flap (5) is extended upwards and downwards, and is rotatably mounted on the casing (1) through up and down rotation shafts, and is driven to swing laterally through a driving mechanism.

8. The cooling fan (100) of claim 1, wherein a cross section of the casing (1) is one of an oval shape, a circular shape, and a racetrack shape.

## Patentansprüche

1. Ein Kühlgebläse (100), umfassend:
ein Gehäuse (1), das einen Lufteinlass (11) und einen Luftauslass (12) umfasst, wobei der Luftauslass (12) an einer Vorderseite des Gehäuses (1) vorgesehen ist, und der Lufteinlass (11) an einer Rückseite des Gehäuses (1) vorgesehen ist; und
eine in dem Gehäuse (1) vorgesehene Radialventilatoranordnung (2), wobei ein Lufteinlassende der Radialventilatoranordnung (2) in Verbindung mit dem Lufteinlass (11) steht und ein Luftauslassende der Radialventilatoranordnung (2) in Verbindung mit dem Luftauslass (12) steht;
**dadurch gekennzeichnet, dass** ein Feuchtigkeitsvorhang (3) zwischen dem Lufteinlass (11) und der Radialventilatoranordnung (2) vorgesehen ist, wobei eine Dicke des Feuchtigkeitsvorhangs (3) D ist und D größer als oder gleich 35 mm ist;
ein Hilfslufteinlass (13) am Gehäuse (1) und unterhalb des Lufteinlasses (11) vorgesehen ist und mit dem Lufteinlass (11) der Radialventilatoranordnung (2) in Verbindung steht; und ein Hilfsfeuchtigkeitsvorhang zwischen dem Hilfslufteinlass (13) und der Radialventilatoranordnung (2) vorgesehen ist,
wobei der Hilfslufteinlass (13) niedriger als der Luftauslass (12) angeordnet ist und der Hilfslufteinlass (13) in einer halbgeschlossenen Ringform von der Rückseite des Gehäuses (1) zur Vorderseite des Gehäuses (1) angeordnet ist;
ein Spalt des halbgeschlossenen Rings mit dem Luftauslass (12) korrespondiert, so dass eine Projektion des Luftauslasses (12) auf eine horizontale Ebene mit einer Projektion des Hilfslufteinlasses (13) auf die horizontale Ebene versetzt angeordnet ist; und
der Hilfsfeuchtigkeitsvorhang eine halbkreisförmige Form aufweist, die an einen Bereich angepasst ist, in dem der Hilfslufteinlass (13) angeordnet ist.

2. Das Kühlgebläse (100) nach Anspruch 1, wobei D kleiner als oder gleich 80 mm ist.

3. Das Kühlgebläse (100) nach Anspruch 1, wobei:
D größer als oder gleich 40 mm ist; und/oder
D kleiner als oder gleich 70 mm ist; und/oder
D größer oder gleich 55 mm ist; und/oder
D kleiner oder gleich 65 mm ist; und/oder
D gleich 60 mm ist.

4. Das Kühlgebläse (100) nach Anspruch 1, wobei:
die Radialventilatoranordnung (2) eine duale Radialventilatoranordnung umfasst, wobei die duale Radialventilatoranordnung zwei übereinander angeordnete Radialturbinen (21) aufweist; und/oder
die Radialventilatoranordnung (2) in einer Oben-Unten-Richtung angeordnet ist und der Luftauslass (12) sich dementsprechend in der Oben-Unten-Richtung erstreckt.

5. Das Kühlgebläse (100) nach Anspruch 4, wobei:
die Radialventilatoranordnung ferner einen zweiachsigen Motor (22) aufweist, und zwei Wellen des zweiachsigen Motors (22) mit entsprechenden Drehwellen der beiden Radialturbinen (21) verbunden sind, um die beiden Radialturbinen (21) gleichzeitig anzutreiben.

6. Das Kühlgebläse (100) nach Anspruch 1, weiter umfassend:
ein Luftführungsgitter (4), das am Luftauslassende (12) der Radialventilatoranordnung vorgesehen ist; und
eine Klappe (5), die außerhalb des Luftführungsgitters (4) vorgesehen ist.

7. Das Kühlgebläse (100) nach Anspruch 6, wobei:
die Radialventilatoranordnung (2) in einer Oben-Unten-Richtung angeordnet ist und der Luftauslass (12) sich dementsprechend in der Oben-Unten-Richtung erstreckt; und
die Klappe (5) sich nach oben und unten erstreckt und über nach oben und unten gerichtete Drehwellen drehbar an dem Gehäuse (1) montiert ist und über einen Antriebsmechanismus zu einer seitlichen Schwenkbewegung angetrieben wird.

8. Das Kühlgebläse (100) nach Anspruch 1, wobei der Querschnitt des Gehäuses (1) eine ovale Form, eine kreisförmige Form oder eine Rennbahnform aufweist.

## Revendications

1. Ventilateur de refroidissement (100), comprenant :
un boîtier (1) comprenant une admission d'air (11) et une sortie d'air (12), où la sortie d'air (12) est disposée sur un avant du boîtier (1), et l'admission d'air (11) est disposée sur un arrière du boîtier (1) ; et
un assemblage de ventilateur centrifuge (2) disposé dans le boîtier (1), une extrémité d'admission d'air de l'assemblage de ventilateur centrifuge (2) étant en communication avec l'admission d'air (11), et une extrémité de sortie d'air de l'assemblage de ventilateur centrifuge (2) étant en communication avec la sortie d'air (12) ;
**caractérisé en ce qu'**un rideau humide (3) est disposé entre l'admission d'air (11) et l'assemblage de ventilateur centrifuge (2), où une épaisseur du rideau humide (3) est D, et D est supérieure ou égale à 35 mm ;
une admission d'air auxiliaire (13) est disposée sur le boîtier (1) et au-dessous de l'admission d'air (11), et
est en communication avec l'admission d'air (11) de l'assemblage de ventilateur centrifuge (2) ; et
un rideau humide auxiliaire est disposé entre l'admission d'air auxiliaire (13) et l'assemblage de ventilateur centrifuge (2),
l'admission d'air auxiliaire (13) est plus basse que la sortie d'air (12), et l'admission d'air auxiliaire (13) présente une forme de boucle à moitié fermée disposée de l'arrière du boîtier (1) à l'avant du boîtier (1) ;
une interruption de la boucle à moitié fermée correspond à la sortie d'air (12), de sorte qu'une projection de la sortie d'air (12) sur un plan horizontal est décalée avec une projection de l'admission d'air auxiliaire (13) sur le plan horizontal ; et
le rideau humide auxiliaire présente une forme semi-circulaire adaptée à une zone où l'admission d'air auxiliaire (13) est disposée.

2. Le ventilateur de refroidissement (100) de la revendication 1, dans lequel D est inférieure ou égale à 80 mm.

3. Le ventilateur de refroidissement (100) de la revendication 1, dans lequel :
D est supérieure ou égale à 40 mm ; et/ou
D est inférieure ou égale à 70 mm ; et/ou
D est supérieure ou égale à 55 mm ; et/ou
D est inférieure ou égale à 65 mm ; et/ou
D est égale à 60 mm.

4. Le ventilateur de refroidissement (100) de la revendication 1, dans lequel :
l'assemblage de ventilateur centrifuge (2) comprend un assemblage de ventilateur centrifuge double, l'assemblage de ventilateur centrifuge double comprend deux turbines centrifuges (21) empilées en haut et en bas ; et/ou
l'assemblage de ventilateur centrifuge (2) est disposé dans une direction haut-bas, et la sortie d'air (12) est étendue dans la direction haut-bas de manière correspondante.

5. Le ventilateur de refroidissement (100) de la revendication 4, dans lequel :
l'assemblage de ventilateur centrifuge double comprend en outre un moteur à deux axes (22), et deux arbres du moteur à deux axes (22) sont connectés à des arbres de rotation correspondants des deux turbines centrifuges (21) pour entraîner les deux turbines centrifuges (21) simultanément.

6. Le ventilateur de refroidissement (100) de la revendication 1, comprenant en outre :
une calandre de guidage d'air (4) disposée au niveau de l'extrémité de sortie d'air (12) de l'assemblage de ventilateur centrifuge ; et
un volet (5) disposé hors de la calandre de guidage d'air (4).

7. Le ventilateur de refroidissement (100) de la revendication 6, dans lequel :
l'assemblage de ventilateur centrifuge (2) est disposé dans une direction haut-bas, et la sortie d'air (12) est étendue dans la direction haut-bas de manière correspondante ; et
le volet (5) est étendu vers le haut et vers le bas, et est monté en rotation sur le boîtier (1) via des arbres de rotation haut et bas, et est entraîné pour osciller latéralement via un mécanisme d'entraînement.

8. Le ventilateur de refroidissement (100) de la revendication 1, dans lequel une section transversale du boîtier (1) présente une d'une forme ovale, une forme circulaire et une forme de piste de course.
